(19) **Europäisches Patentamt**

**European Patent Office**

**Office européen des brevets**

(11) **EP 0 770 463 B1**

(12) **FASCICULE DE BREVET EUROPEEN**

(45) Date de publication et mention
de la délivrance du brevet:
**13.12.2000 Bulletin 2000/50**

(51) Int Cl.7: **B29C 37/00**, B29C 70/48,
B29C 45/73

(21) Numéro de dépôt: **96402257.8**

(22) Date de dépôt: **24.10.1996**

(54) **Procédé de moulage de pièces allongées à haute résistance en composite fibre-résine**

Verfahren zum Formen von faserverstärkten, hochfesten, langgestreckten Gegenständen

Process for manufacturing fiber-reinforced, high-strength elongated articles

(84) Etats contractants désignés:
**DE FR GB**

(30) Priorité: **25.10.1995 FR 9512562**

(43) Date de publication de la demande:
**02.05.1997 Bulletin 1997/18**

(73) Titulaire: **SNECMA MOTEURS**
**75015 Paris (FR)**

(72) Inventeurs:
• **David, Laurent Jean Pierre**
**91250 Saint Germain Les Corbeil (FR)**
• **Girault, Daniel Georges**
**77000 Melun (FR)**
• **Grosbois, Christophe Gérard**
**77380 Combs La Ville (FR)**

(56) Documents cités:
**EP-A- 0 294 768**          **EP-A- 0 533 418**
**EP-A- 0 611 641**          **WO-A-90/13413**
**DE-A- 3 603 274**          **US-A- 4 338 068**
**US-A- 4 784 814**

• **PATENT ABSTRACTS OF JAPAN vol. 6, no. 181**
**(M-156), 17 Septembre 1982 & JP-A-57 089929**
**(DAINIPPON PRINTING CO.), 4 Juin 1982,**
• **PATENT ABSTRACTS OF JAPAN vol. 011, no.**
**123 (M-581), 17 Avril 1987 & JP-A-61 263714**
**(TOSHIBA CORP), 21 Novembre 1986,**
• **PATENT ABSTRACTS OF JAPAN vol. 013, no.**
**512 (M-893), 16 Novembre 1989 & JP-A-01**
**206009 (EBARA CORP), 18 Août 1989,**
• **PATENT ABSTRACTS OF JAPAN vol. 012, no.**
**292 (M-729), 10 Août 1988 & JP-A-63 069613**
**(MAZDA MOTOR CORP), 29 Mars 1988,**

## Description

L'objet de l'invention est un procédé de moulage de pièces allongées à haute résistance en matériau composite fibre-résine plus particulièrement mais non exclusivement adapté aux aubes de turbomachine telles les aubes de soufflante.

Le procédé RTM (resin transfert molding) est utilisé notamment dans l'aéronautique pour réaliser des pièces en matériau composite fibre-résine organique à haut rapport résistance sur masse. Il comporte les opérations fondamentales suivantes :

a) réalisation d'une préforme de fibres à la forme de la pièce finie,
b) disposition de la préforme dans un moule,
c) injection de résine à l'état liquide,
d) application d'une pression de maintien sur la résine et polymérisation par chauffage.

Les résines utilisées sont très fluides et pénètrent bien entre les fibres de la préforme, même lorsqu'elles sont injectées sous une pression réduite. Pendant la polymérisation sous l'effet de la chaleur, la résine passe successivement de l'état liquide à l'état gélifié et enfin à l'état solide.

Ces résines présentent cependant l'inconvénient d'avoir un retrait volumique de 4 % à 8 % pendant la phase de gélification, ce qui provoque l'apparition de retassures, c'est à dire de manques de matière dans la pièce.

Dans le cas où la température de la pièce est homogène, la surface de cette pièce est rugueuse, car l'intérieur de la pièce plus chaud se polymérise en premier et attire de la résine encore liquide de la surface.

Toutefois, les parties les plus volumineuses de la pièce s'échauffent et se polymérisent plus vite du fait que la réaction de polymérisation est exothermique et que la chaleur ainsi produite s'évacue plus lentement. Des retassures tendent alors à se former dans les parties les plus froides qui se polymérisent en dernier et qui alimentent de ce fait en résine liquide les parties plus chaudes.
Ce phénomène est particulièrement gênant dans le cas des aubes de turbomachine dont la pale présente un bord de fuite allongé et mince dans lequel les retassures tendent à se former.

Il est connu de doter les moules à la fois d'éléments chauffants et d'éléments réfrigérants pour réchauffer les parties plus froides et refroidir les parties plus chaudes pendant la polymérisation. De tels systèmes sont cependant très délicats à régler, et restent peu efficaces lorsque la pièce présente localement des masses importantes.
De plus, ils ne résolvent pas le problème de la rugosité en surface.
On connaît par la publication de l'enregistrement d'invention statutaire US-H559 du 6 Décembre 1988 un procédé de moulage en enveloppe souple consistant à créer et à déplacer un front de gélification dans la pièce en pressant cette pièce entre deux plateaux dont l'un est chauffé et l'autre refroidi, le plateau refroidi étant ensuite progressivement chauffé à la température de polymérisation de la pièce pour déplacer le front de gélification. Toutefois, ce procédé est réservé aux pièces minces d'épaisseur uniforme, et il est présenté comme un moyen de faciliter l'évacuation des composants volatiles issus de la polymérisation et non de résorber les retassures de retreint. Par ailleurs, il ne permet pas un dimensionnement précis dans le sens de l'épaisseur.

Pour résoudre le problème posé, l'invention propose un procédé d'obtention de pièces allongées en matériau composite fibre-résine organique mettant en oeuvre le procédé RTM précédemment décrit au titre de l'état de la technique Un tel procédé est remarquable en ce que :

a) le moule comporte une succession de sources de chaleur s'échelonnant d'une extrémité à l'autre de la pièce dans le sens de sa longueur, les sources de chaleur étant à une température inférieure à la température de polymérisation de la résine,
b) après avoir injecté la résine liquide dans le moule, on maintient à une extrémité de la pièce une source d'alimentation en résine liquide sous pression,
c) on active la source de chaleur à l'autre extrémité de la pièce, et on porte la matière dans son voisinage à la température de polymérisation,
d) on active ensuite successivement et de proche en proche les autres sources de chaleur, afin d'amener à la température de polymérisation la matière au voisinage de chacune d'elles avec un échelonnement préétabli dans le temps, l'alimentation en résine liquide sous pression étant maintenue,
e) on maintient ensuite la matière à la température de polymérisation pendant le temps nécessaire à sa polymérisation.

On comprend que l'activation successive et de proche en proche des sources de chaleur crée et déplace un front de gélification qui parcourt toute la pièce depuis l'extrémité la plus éloignée de la source de résine liquide jusqu'à atteindre cette source. Dans ce front, la matière passe de l'état liquide à l'état gélifié tout en restant au contact de résine liquide sous pression, cette résine liquide comblant ainsi les vides laissés par la résine gélifiée. La surface de la pièce est donc lisse et les retassures n'apparaissent plus aux extrémités de la pièce, ce qui résout le problème posé.

La vitesse de déplacement du front sera de préférence lente pour deux raisons :

- la résorption des retassures est améliorée lorsque le front est étroit,
- on ne peut gélifier qu'une quantité limitée de matière à la fois, du fait que le débit de résine sous pression à travers la préforme, ce débit étant nécessaire à l'alimentation du front, est limité par la viscosité de la résine.

De ce fait, on disposera aussi avantageusement dans le moule une succession d'éléments réfrigérants échelonnés d'une extrémité à l'autre de la pièce. Ces éléments réfrigérants sont activés au départ de la polymérisation, et chaque élément réfrigérant est ensuite désactivé lorsqu'une source de chaleur est activée à proximité. Ces éléments réfrigérants absorbent la chaleur qui arrive par thermoconduction dans la résine liquide en amont du front, ce qui empêche une élévation prématurée de température dans cette région et corrélativement un début de polymérisation entraînant une augmentation de viscosité nuisible à l'écoulement de la résine et à une bonne alimentation du front de gélification. En d'autres termes, cette réfrigération permet de réduire la largeur du front de gélification et d'amener de la résine liquide au plus près de la résine en cours de polymérisation afin de mieux combler les retassures en cours de formation. Cette amenée de résine peut alors s'effectuer sans difficulté entre les fibres de la préforme et à faible pression ce qui réduit le risque de tassement de la préforme ainsi que la force hydrostatique exercée par la résine liquide sur les parois du moule, cette force tendant à ouvrir le moule et pouvant prendre des valeurs importantes dans le cas de pièces de grandes dimensions, par exemple des aubes de soufflante de turbomachine.

L'invention sera mieux comprise et les avantages qu'elle procure apparaîtront plus clairement au vu d'un exemple détaillé de réalisation et des figures annexés ;

La figure 1 illustre l'apparition de retassures dans le bord de fuite d'une aube avec le procédé connu.

La figure 2 illustre le moulage de cette même aube conformément à l'invention.

La figure 3 illustre la formation du front de gélification.

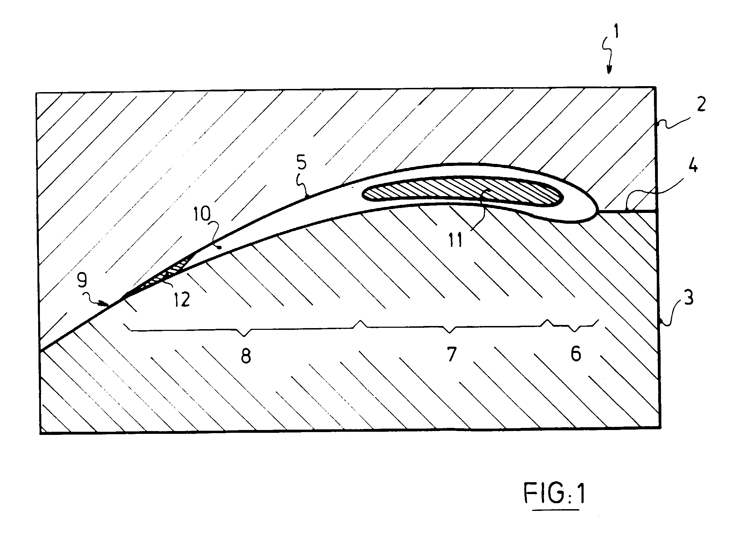

On se reportera en premier lieu à la figure 1. Le moule 1 est en deux parties 2 et 3 séparées par une surface de jointure 4 et comporte une cavité 5 à la forme de l'aube que l'on voit dans cette figure selon une coupe transversale de la pale. Cette pale comporte successivement de l'avant vers l'arrière un bord d'attaque 6, un corps 7 et un bord de fuite 8. Le bord d'attaque 6 est arrondi, le corps 7 est la partie la plus épaisse et le bord de fuite 8 va en s'amincissant jusqu'à son extrémité 9.

Le moule 1 est chauffé pour amener progressivement la résine 10 injectée dans la cavité 5 à la température de polymérisation. La réaction est exothermique et provoque un échauffement supplémentaire dans le corps 7 et vers la bord d'attaque 6 plus épais, cet échauffement provoquant lui même la polymérisation et la gélification accélérée d'une masse 11 de résine, cette masse 11 ayant tendance à fixer la résine 10 encore liquide qui l'entoure. Comme cette gélification s'accompagne d'une réduction de volume de 4 à 8 % selon les résines employées, la résine 10 dans le bord de fuite 8 se déplace vers la masse 11, ce qui provoque la formation de retassures 12 vers l'extrémité 9.

Si on élevait la température du bord de fuite 9, on réduirait l'apparition des retassures 12, mais on ne pourrait pas empêcher la migration de résine liquide depuis la surface de la pièce vers la masse en cours de gélification à l'intérieur de la pièce, et la surface resterait de ce fait rugueuse.

Cependant, du fait que la chaleur s'évacue mal dans les parties épaisses, la polymérisation provoque une élévation de température qui accélère elle-même la polymérisation, ce qui est à l'origine d'un processus instable difficile à contrôler par des apports extérieurs de chaleur ou de froid.

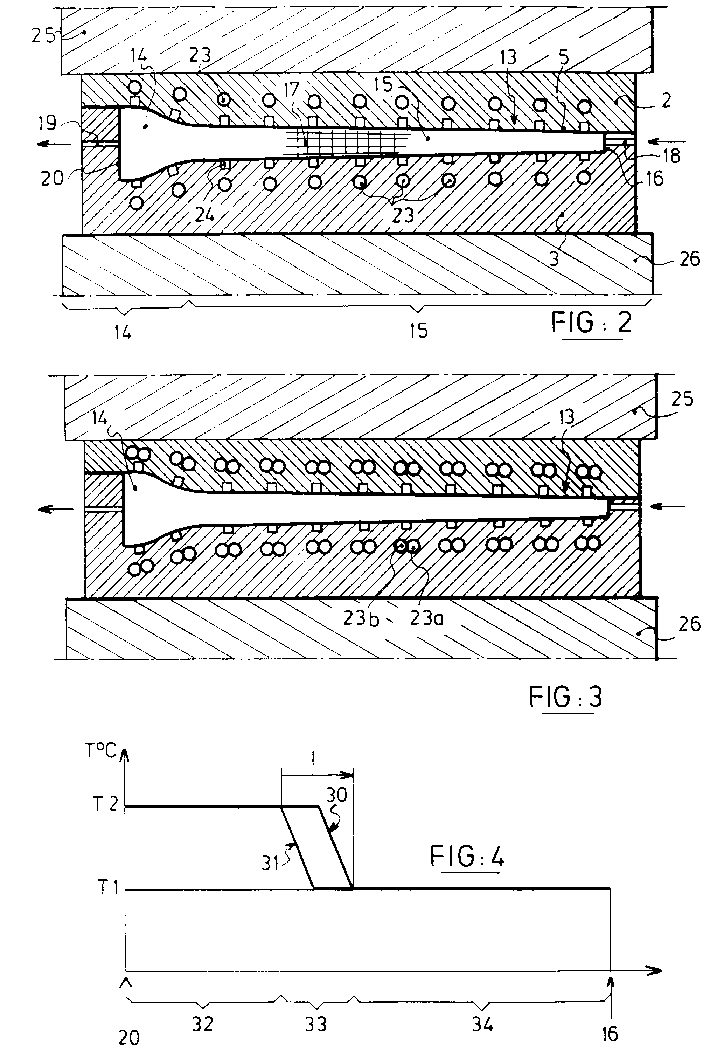

On se reportera maintenant à la figure 2. L'aube à façonner 13 est représentée à l'intérieur du moule 1 dans le sens de la hauteur et comporte un pied 14 épais en queue d'aronde et une pale 15 mince d'extrémité 16.

La préforme de fibres de renfort 17, partiellement représentée, ayant été déposée à l'intérieur du moule 1, on injecte la résine par au moins un conduit 18 débouchant à l'extrémité 16, et en même temps, on aspire par au moins un conduit 19 débouchant dans le pied 14 à l'extrémité opposée 20 de l'extrémité 16 l'air et l'excédent de résine dans la cavité 5 du moule 1.

Le moule 1 comporte une pluralité de conduits 23 échelonnés entre les extrémités 20 et 16 dans la masse du moule, c'est à dire à l'extérieur de la cavité 5 et à proximité des parois de cette cavité 5. Un fluide caloporteur chaud ou froid circule dans les conduits 23. Avantageusement, la circulation et la température de ce fluide seront régulés pour chaque conduit par un système de régulation à partir d'une température de consigne et de l'information donnée par un capteur de température 24 placé à proximité de la paroi de la cavité 5 dans le voisinage dudit conduit 23. L'ensemble conduits 23 + fluide + régulation est dimensionné pour maintenir dans la résine à la hauteur de chaque conduit 23 une température entre la température $T_1$ de la résine durablement liquide et la température $T_2$ de la résine soumise à la polymérisation.

Avantageusement aussi, afin de réduire la capacité de l'ensemble conduits 23 + fluide + régulation, le moule 1 sera serré entre les plateaux 25 et 26 d'une presse chauffante, la température de ces plateaux étant fixée à une valeur $T_m$ proche de $T_1$ et $T_2$, avec de préférence $T_m = T_1$. Ceci permet de réduire la quantité de chaleur véhiculée, donc le débit de fluide caloporteur qui ne maintient plus que les différences de température $T_1-T_m$ et $T_2-T_m$, ce qui autorise une régulation plus précise.

Pendant l'injection de résine, les conduits 23 maintiennent à $T_1$ la température de la résine. La polymérisation se fait ensuite selon le programme suivant :

a) montée à T2 du conduit 23 le plus proche de l'extrémité 20 opposée à l'extrémité 16 par laquelle on maintient une alimentation en résine liquide sous pression,

b) montée à T2 du conduit 23 suivant en direction de l'extrémité 16,

c) montée à T2 successivement et de proche en proche les conduits 23 avec un échelonnement préétabli dans le temps, les conduits 23 déjà montés à T2 étant maintenus à cette température, et les conduits 23 non encore montés à T2 étant maintenus à T1.

Lorsque tous les conduits 23 ont été montés à T2, l'ensemble est maintenu à cette température pendant la durée de polymérisation de la résine, afin de polymériser complètement la résine de l'extrémité 16.

Une alimentation en résine liquide sous pression à l'extrémité 16 par le conduit 18 est maintenue depuis la montée à T2 du premier conduit 23 à l'extrémité 20 jusqu'à la gélification de la résine à l'autre extrémité 16.

On se reportera maintenant à la figure 3. L'abscisse exprime la longueur de l'aube 13 entre les extrémités 20 et 16, l'ordonnée exprime les températures T, notamment les deux échelons de températures remarquables :

T1 : température de la résine durablement liquide, c'est à dire au moins jusqu'à la monté en température du dernier conduit 23,

T2 : température de polymérisation de la résine,

la courbe 30 exprime la distribution à un moment quelconque de la répartition de la température T de la résine entre les extrémités 20 et 16 de la pièce, et la courbe 31 l'état de cette même résine, c'est à dire liquide à T1 et gélifié puis solide au bout d'un certain temps à T2.

En se déplaçant de l'extrémité 20 jusqu'à l'extrémité 16 d'injection, on observe successivement trois phases de la résine :

- une phase gélifiée ou solide 32 à la température T2, dans laquelle les courbes 30 et 31 sont confondues.
- une phase de gélification ou front de gélification 33 dans lequel les courbes 30 et 31 sont séparées, la courbe 30 exprimant le début de la gélification et la courbe 31 la fin de la gélification,
- une phase encore liquide 34.

Au fur et à mesure que l'on porte les conduits 23 de T1 à T2, le front de gélification 33 se déplace des extrémités 20 à 16 avec une vitesse V. Ce front à une largeur L donnée par la relation

$$L = V (t1 + t2)$$

dans laquelle t1 représente le temps de montée en température de T1 à T2, et t2 le temps de polymérisation.

On réduira la largeur L du front en réduisant la vitesse V de déplacement du front, donc en augmentant l'intervalle de temps entre la monté à T2 de deux conduits successifs 23, et inversement. On comprend aussi que lorsque L est faible, les vides laissés par la résine gélifiée sont facilement comblés par la résine liquide sous pression qui se polymérisera et permettra d'obtenir un bloc de matière homogène.

L'homme du métier déterminera par quelques expérimentations simples à des vitesses différentes la vitesse V donnant la qualité de matière requise, tl et t2 dépendant de l'épaisseur de la pièce et de la nature de la résine et pouvant en conséquence être assimilés à des constantes.

On remarquera que la réfrigération de la phase encore liquide 34 par les conduits 23 restés à la température T1 régulée empêche l'échauffement de ladite phase liquide 34 par transfert de chaleur depuis le front 33 ce qui présente deux avantages :

a) le front 33 n'est pas élargi,

b) la résine de la phase liquide 34 ne commence pas à se polymériser, reste en conséquence très fluide et s'écoule facilement entre les fibres de la préforme 17 pour alimenter le front 33 et combler les vides laissés par la résine gélifiée, ce qui améliore encore la qualité de la pièce obtenue.

Un autre avantage du procédé est que même à une vitesse V élevée, les retassures ne se concentrent pas dans l'extrémité froide 16 de la pièce 13.

On remarquera que dans cet exemple les conduits 23 constituent à la fois des sources de chaleur et de froid. Ces deux fonctions peuvent très bien être assurées par des conduits spécialisés, c'est à dire par une combinaison de conduits chauffants 23a et réfrigérants 23b distincts, constituant des sources de chaleur 23a et des éléments réfrigérants 23b, ou par un système mixte non représenté combinant des résistances électriques de chauffage et des conduits de réfrigération.

On peut aussi disposer les capteurs de température 24 dans les conduits 23 à l'intérieur ou à la sortie du moule 1. Cette solution moins coûteuse est cependant moins précise et exige une circulation de fluide permanente et suffisante dans les conduits 23.

**Revendications**

1. Procédé de réalisation de pièces allongées à haute résistance en matériau composite fibre-résine organique, ledit procédé comportant notamment les opérations suivantes :

   - réalisation d'une préforme de fibres (17),
   - disposition de la préforme (17) dans un moule (1) comportant une succession de sources de chaleur (23, 23a) s'échelonnant d'une extrémité (16) à l'autre extrémité (20) de la pièce (13) dans le sens de la longueur,

- injection de résine liquide dans le moule (1) et maintien à une extrémité (16) d'une source d'alimentation (18) de résine liquide sous pression,

- activation d'une source de chaleur (23, 23a) à l'extrémité (20) opposée à l'extrémité (16) et portée de la matière dans son voisinage de la température T2 de polymérisation de la résine,

- activation successive et de proche en proche des autres sources (23, 23a) de chaleur avec un échelonnement préétabli dans le temps,

caractérisé en ce que :

a) Le moule (1) comporte une succession d'éléments réfrigérants (23b) échelonnés d'une extrémité (16) à l'autre extrémité (20) de la pièce (1) dans le sens de la longueur,
b) Les éléments réfrigérants (23b) sont activés au démarrage de la polymérisation,
c) chaque élément réfrigérant (23b) est désactivé lorsqu'une source de chaleur (23b) est activée dans son voisinage,

afin d'absorber la chaleur qui arrive par thermoconduction dans la résine liquide en amont du front de gélification.

**2.** Procédé selon la revendication 1, caractérisé en ce que les sources de chaleur (23, 23a) et de froid (23b) sont constituées par un ensemble de conduits (23) dans chacun desquels circulent tour à tour un liquide chauffant et un liquide réfrigérant.

**3.** Procédé selon l'une quelconque des revendications 1 ou 2 caractérisé en ce que le moule (1) est disposé entre les plateaux (25, 26) d'une presse chauffante, afin de réduire la quantité de chaleur véhiculée dans les sources (23, 23a, 23b)..

**Patentansprüche**

**1.** Verfahren zur Herstellung von langgetreckten, hochfesten Teilen aus einem Faser-Harz-Verbundwerkstoff, wobei dieses Verfahren insbesondere die Verfahrensschritte umfaßt:

- Herstellen einer Faservorform (17),
- Anordnen der Vorform (17) in einer Form (1), die eine Folge von Wärmequellen (23, 23a) aufweist, die in Längsrichtung von dem einen Ende (16) zu dem anderen Ende (20) des Teils (13) stufenweise verteilt sind,

- Einspritzen von flüssigem Harz in die Form (1) und Beibehalten einer Speisequelle (18) für unter Druck stehendes flüssiges Harz an einem Ende (16),

- Aktivieren einer Wärmequelle (23, 23a) an dem dem genannten Ende (16) entgegengesetzten Ende (20) und Hinführen des Werkstoffs in seiner Nachbarschaft auf die Polymerisationstemperatur T2 des Harzes,

- sukzessives und sich allmählich ausbreitendes Aktivieren der anderen Wärmequellen (23, 23a) mit einer vorbestimmten zeitlichen Abstufung,

**dadurch gekennzeichnet,** daß

a) die Form (1) eine Folge von Kühlelementen (23b) aufweist, die in Längsrichtung von einem Ende (16) zu dem anderen Ende (20) des Teils stufenweise verteilt sind,
b) die Kühlelemente (23b) beim Starten der Polymerisation aktiviert werden,
c) jedes Kühlelement (23b) desaktiviert wird, wenn eine Wärmequelle (23a) in ihrer Nachbarschaft aktiviert wird,

um die Wärme abzuführen, die vor der Aushärtungsfront durch Wärmeleitung in dem flüssigen Harz auftritt.

**2.** Verfahren nach Anspruch 1, dadurch gekennzeichnet, daß die Wärmequellen (23, 23a) und die Kühlquellen (23b) aus einem Satz von Leitungen (23) bestehen, in denen jeweils abwechselnd eine Heizflüssigkeit und eine Kühlflüssigkeit zirkulieren.

**3.** Verfahren nach einem der Ansprüche 1 oder 3, dadurch gekennzeichnet, daß die Form (1) zwischen den Platten (25, 26) einer Heizpresse angeordnet ist, um die in den Quellen (23, 23a, 23b) transportierte Wärmemenge zu reduzieren.

**Claims**

**1.** Process for producing high-strength elongate parts made of a fibre/organic-resin composite, the said process especially comprising the following operations:

- of producing a fibre preform (17),
- of placing the preform (17) in a mould (1) which has a succession of heat sources (23, 23a) spaced apart from one end (16) of the part (13) to the other end (20), in the length direction,
- of injecting liquid resin into the mould (1) and of keeping, at one end (16), a liquid-resin feed (18) under pressure,

- of activating a heat source (23, 23a) at the end (20) opposite the end (16) and of heating the material in its vicinity to the temperature T2- for curing the resin,
- of successively activating, step by step, the other heat sources (23, 23a) with a pre-established staggering over time,

characterized in that:

a) the mould (1) comprises a succession of refrigerating elements (23b) spaced apart from one end (16) of the part (13) to the other end (20), in the length direction,
b) the refrigerating elements (23b) are activated at the onset of curing,
c) each refrigerating element (23b) is deactivated when a heat source (23b) is activated in its vicinity,

so as to absorb the heat which flows, by thermal conduction, into the liquid resin upstream of the gelling front.

2. Process according to Claim 1, characterized in that the heat sources (23, 23a) and the refrigeration sources (23b) consist of a set of ducts (23) in each of which a heating liquid and a refrigerating liquid flow, respectively.

3. Process according to either of Claims 1 and 2, characterized in that the mould (1) is placed between the platens (25, 26) of a heating press so as to reduce the amount of heat sent into the sources (23, 23a, 23b).

FIG:1

FIG : 2

FIG : 3

FIG : 4